# EUROPEAN PATENT SPECIFICATION

(11) **EP 1 691 555 B1**
(45) Date of publication and mention of the grant of the patent: **20.03.2013**
(21) Application number: 05003086.5
(22) Date of filing: 14.02.2005
(51) Int. Cl.: H04N 7/173

(54) **System for providing a music channel with true ring-tone download capability**
System fur einen Musikkanal mit Downloadfähigkeit von getreuen Ruftönen
Système pour fournir une chaîne musicale avec la capacité de téléchargement de sonneries vraies

(43) Date of publication of application: 16.08.2006
(73) Proprietor: Intel Corporation, Santa Clara, CA 95052 (US)
(72) Inventor: Lipponen, Jarkko, 5081 Anif (AT)
(74) Representative: Ganahl, Bernhard

(56) References cited:
- WO-A-02/03374
- US-A1- 2002 087 656
- US-A1- 2003 109 251
- US-A1- 2004 034 536
- US-B1- 6 366 791

## Description

The present invention relates to a system for providing at least one music channel, which is/are preferably personalized.

Such a music channel is usually provided by the system to a user device via a network. Networks have become ubiquitous these days. Telephone networks, computer networks, cellular networks are part of life. These networks, once separate entities, co-mingle to form means for the transport of data to any connected device. The networks enable people access to data, data that informs and entertains. Once information and entertainment items that suit the information needs, the entertainment wants and the personal tastes are found by the system based on an indication of a user or a user profile, access of the content is performed and transmitted to the user device.

The applicant developed a Personal Media System (PMA), which is an entertainment product offering a music service, e.g.:
personalized channels, pre-defined channels, pre-defined playlists, consumer defined playlists, a music selection feature, and related content like ringtones typically for use with mobile (cellular) telephone handsets, in audio form with a display of the playlist in text form.

The PMA service is offered to end-consumers over any data network, e.g.:
■ mobile telephone network (including 3G, 4G and other wireless data networks whether circuit or packet switched),
■ digital interactive TV including interactive TV and DVB-H (Digital Video Broadcasting - Handheld) networks

The PMA service is available on any capable device, e.g.:
■ mobile (cellular) phone,
■ personal computer,

- home entertainment product, e.g.: TV set, HiFi stereo, game console..., and/or
- mobile entertainment product, e.g. network walkman™, ....

The service offered is either of
- a streaming service, i.e. the consumer does not own the content, e.g. media content is selected for one-time only playback, and
- a download service, i.e. the consumer owns or licenses the content, e.g. media content is-downloaded to storage managed by the consumer.

Therefore, a sophisticated structure to supply content to consumers is given.

US 2004/0034536 A1 discloses a system comprising an agent, a streaming audio player and speakers. The agent obtains music schedules from various music channels. The agent chooses the best song to play based on a user profile. The corresponding IP-address of the music title is forwarded from the agent to the streaming audio player for outputting the music title at the speakers.

US 6,366,791 B1 discloses a telecommunication system and method. The user of a mobile station (e.g. mobile phone or PDA) can collect via the internet a certain song. He receives via the telecommunication system a ringing tone pattern which is automatically installed in this mobile system. In the database the ringing tone patterns are stored. By this method a network operator selects a musical score and provides this to a ringing tone logic with the home location register (HLR). The ringing tone logic accesses a calculation logic within the HLR to calculate ringing tone patterns for the musical scores for each type of mobile station (MS). Once calculated, the ringing tone logic stores each of these calculated ringing tone patterns within the database.

However, in general no or only limited additional services, i.e. services that enhance the music service, are offered.

Therefore, it is the object underlying the present invention to enhance a music service which is provided from a system to a user device.

This object is solved by a system for providing at least one music channel to a user device according to independent claim 1, by a user device for receiving at least one music channel from a system according to independent claim 13, by a method for streaming music titles via a channel to a user device according to independent claim 17, and by a method for receiving at least one music channel from a system according to independent claim 28. Respective preferred embodiments thereof are respectively defined in the respective following sub-claims. A computer program product according to the present invention is defined in claim 33 and a computer readable storage means according to the present invention are defined in claim 34.

Therefore a system for providing at least one music channel to a user device according to the present invention comprises a user request evaluation unit for receiving an incoming user request in respect to a true ring-tone for a particular individual music title played in said at least one music channel and for a subsequent transmitting of said true ring-tone to the user device.

In other words, the system according to the present invention enhances a music channel, which is preferably an individualized music channel, by offering a download-service for true ring-tones of the music titles in the playlist of the music channel. The user that listens to the music channel has then the opportunity to decide that he wants to obtain a true ring-tone of e.g. the currently played music title and can immediately initiate a download of the corresponding true ring-tone, as it is set-out in more detail below. The true ring-tone might be transferred from the user device to another device of the user, e.g. a mobile phone, or might be used as a ring-tone or alarm tone in the user device itself, in particular when the user device is a multi-purpose device, like a PDA or a SmartPhone that are adapted to receive music channels.

In the system according to the present invention, preferably said at least one music channel is personalized to a user of the user device. In this case the user of the user device listens to songs that fit to his/her taste so that the usage of the system to retrieve a true ring-tone is more likely in comparison to a non-personalized general music channel. This implies that the system can beforehand, i.e. before a user issues a request in respect to a true ring-tone for a particular individual music title, start the preparation or retrieval of true ring-tones for every music title in the playlist of the personalized music channel so that a immediate transmission of said true ring-tone to the user device is possible after the request is issued and analyzed by the system. Further, depending on the kind of personalization, e.g. in case the personalization includes new titles that are similar to titles the user likes, the user is encouraged to discover new music and to perform an instant "buy" of the corresponding true ring-tone.

In the system according to the present invention, alternatively or additionally preferably said particular individual music title is the currently played music title. Of course, the service might also be offered to other music titles of the music channel, as they are e.g. indicated in a playlist of the music channel that is transmitted o the user device.

The system according to the present invention preferably additionally comprises a true ring-tone generator to automatically generate a true ring-tone from a particular music title. In this case, the true ring-tone generator preferably has the ability to generate true ring-tones for a plurality of different kinds of user devices. This embodiment enables to generate true ring-tones in an automated manner on demand, since the music title from which the true ring-tone is to be generated is available as well as a tool to generate a true ring-tone from this music title.

In this embodiment of the system according to the present invention, preferably said true ring-tone generator considers the type of user device when generating said true ring-tone. This preferred form of the preferred embodiment saves resources, since only the true ring-tone for a particular kind of user device might be generated and transmitted to the user device.

In this embodiment of the system according to the present invention, preferably said true ring-tone generator uses the first 30 seconds of said particular music title for generating said true ring-tone.

Alternatively, in this embodiment of the system according to the present invention, preferably said true ring-tone generator analyses said particular music title in respect to a characteristic part thereof and uses said characteristic part of said music title for generating said true ring-tone.

The system according to the present invention preferably alternatively or additionally further comprises a database that stores true ring-tones of individual music titles in different formats that correspond to different types of user devices. This embodiment enables to generate true ring-tones in an automated manner in advance and to have the possibility to immediately begin with the download of a true ring-tone, since no generating of a true ring-tone from a music title has to be performed after the request to receive a true ring-tone.

In this case, the system according to the present invention preferably further comprises a true ring-tone retrieval unit for determining whether or not a true ring-tone for a particular individual music title and a particular type of user device is available in the database, and for retrieving said true ring-tone if it is available. In a preferred combination of the embodiment of the present invention that comprises the true ring-tone generator and the embodiment of the present invention that comprises the database, the true ring-tone retrieval unit can be used to manage the provision of the true ring-tones in that first a check is performed to determine whether or not the requested true ring-tone (true ring-tone from a particular music title and for a particular user device) is already available in the database. If this is the case, a downloading of the true ring-tone from the database is enabled or the true ring-tone is retrieved from the database and communicated to the user device. On the other hand, if this is not the case, the ring-tone retrieval unit instructs the ring-tone generator to generate the requested true ring-tone.

Further, the ring-tone retrieval unit might be used to fill the database by verifying whether or not a true ring-tone for a currently output song is available in the database and, if this is not the case, instructing the ring-tone generator to generate a true ring-tone from that music title in different formats (i.e. for different kinds of used devices) and to store this generated true ring-tone in the database.

Further, the system according to the present invention preferably alternatively or additionally further comprises a charging unit, adding a charge for the transmitted true ring-tone to an account of the user.

Further, the charging unit of the system according to the present invention preferably additionally further registers a rights charge corresponding to at least a part of the user charge to an account of the rights holder in the music title. This preferred embodiment of the present invention enables the collection of royalties by the rights holder. The rights holder is for example at least one of the owner, artist, composer, distributor or other rights holder in the music title.

Further, the system according to the present invention preferably alternatively or additionally further comprises a license unit to determine license conditions defining a usage duration of the true ring-tone, within which it is operable on the user device and to associate and send these license conditions with the true ring-tone, and/or to generate a key on basis of which the user device can modify license conditions associated to and received with a true ring-tone. Therewith, in the system according to these preferred embodiments of the present invention the transmitted true ring-tone is operable and/or licensed for a predetermined usage duration on the user device. This means that in these preferred embodiments of the present invention the playback of the transmitted true ring-tone can be limited to a predetermined number of times, number of seconds, or as many replays as desired within a preset period (e.g. one week). This feature could also include one or more test or preview playbacks which may be without charge. If a user has a playback limited version of a ring-tone, the user can upgrade and obtain an unlimited playback version. In some embodiments the ring-tone may include embedded secure license conditions data. This may be embedded as a digital watermark. When a user upgrades, the license conditions data may be securely modified to indicate unlimited playback. This obviates the need to resend the entire ring-tone data. Ring-tones for preview by the user may be protected by an audible watermark (i.e. to audibly degrade the ring-tone in some way) which may be removed by applying a key received from the system on payment of an upgrade fee. Embedded secure license conditions data may also be used to license the ring-tone to a specific user device or to control whether a ring-tone may be transferred from one user device to another.

A user device for receiving at least one music channel from a system according to the present invention comprises a true ring-tone request communication unit for transmitting a user request in respect to a true ring-tone for a particular individual music title of the at least one music channel to the system.

This true ring-tone request communication unit preferably comprises a very simple "one button" interface so that the user can just press one button on his user device and the true ring-tone corresponding to a particular individual music title, e.g. the currently played song or the previously played song, gets requested from the system. To provide a wider choice of music titles, the one button interface might be arranged together with a playlist of the currently accessed music channel, which enables a selection of one of the music titles available in the playlist and to activate the one button thereafter in order to initiate the request for a corresponding true ring-tone.

In the user device according to the present invention, preferably said particular individual music title is the currently played music title.

The user device according to the present invention preferably additionally comprises a true ring-tone receiving unit to receive the true ring-tone from the system.

In this case, the user device according to the present invention further preferably additionally comprises a licensing unit to determine a usage duration of the received true ring-tone, within which it is operable on the user device, on basis of license conditions received with the true ring-tone, and/or to modify license conditions received with a true ring-tone on basis of a key received from the system.

Therewith, the user device for receiving at least one music channel from a system according to the present invention supports the features of the system for providing at least one music channel to a user device according to the present invention.

The method for providing at least one music channel to a user device according to the present invention comprises the steps:
receiving an incoming user request in respect to a true ring-tone for a particular individual music title played in said at least one music channel, and
subsequently transmitting said true ring-tone to the user device.

This method according to the present invention preferably further comprises the step of:
personalising said at least one music channel to a user of the user device.

Further, in this method according to the present invention, alternatively or additionally preferably said particular individual music title is the currently played music title.

This method according to the present invention preferably further comprises the step of:
automatically generating a true ring-tone from a particular music title.

In this case, this method according to the present invention preferably further comprises the step of:
considering the type of user device when generating said true ring-tone.

In this case, this method according to the present invention preferably alternatively or additionally further comprises the step of:
using the first 30 seconds of said particular music title for generating said true ring-tone.

Alternatively in this case, this method according to the present invention preferably alternatively or additionally further comprises the steps:
analysing said particular music title in respect to a characteristic part thereof, and
using said characteristic part of said music title for generating said true ring-tone.

This method according to the present invention preferably alternatively or additionally further comprises the step of:
storing true ring-tones of individual music titles in different formats that correspond to different types of user devices in a database.

In this case, this method according to the present invention preferably further comprises the steps:
determining whether or not a true ring-tone for a particular individual music title and a particular type of user device is available in the database, and
retrieving said true ring-tone if it is available.

Further, this method according to the present invention preferably alternatively or additionally further comprises the step of:
adding a charge for the transmitted true ring-tone to an account of the user.

In this case, this method according to the present invention preferably additionally further comprises the step of:
registering a rights charge corresponding to at least a part of the user charge to an account of the rights holder in the music title.

Further, this method according to the present invention preferably alternatively or additionally further comprises the step of:
indicating and/or licensing the transmitted true ring-tone to be operable for a predetermined usage duration on the user device.

Therewith, the method for providing at least one music channel to a user device according to the present invention enables all features of the system for providing at least one music channel to a user device according to the present invention.

A method for receiving at least one music channel from a system according to the present invention comprises the step of:
transmitting a user request in respect to a true ring-tone for a particular individual music title of the at least one music channel to the system.

In this method according to the present invention, preferably said particular individual music title is the currently played music title.

Further, this method according to the present invention preferably further comprises the step of:
receiving said true ring-tone from the system.

Therewith, the method for receiving at least one music channel from a system according to the present invention enables all features of the user device for receiving at least one music channel from a system according to the present invention.

A computer program product according to the present invention comprises computer program means adapted to perform the method steps as defined above when being executed on a computer, digital signal processor or the like.

A computer readable storage means according to the present invention stores thereon a computer program product according to the present invention.

For a better understanding of the invention and to further elucidate the invention, its features, objects and advantages, an exemplary preferred embodiment thereof is described in detail by way of example while making reference to the accompanying drawing, wherein:
- **Fig. 1**: shows an example of a music channel provision system and a user device for receiving music channels according to an exemplary embodiment of the present invention, and
- **Fig. 2**: shows a flowchart of the provision of true ring-tones according to a preferred exemplary embodiment of the present invention.

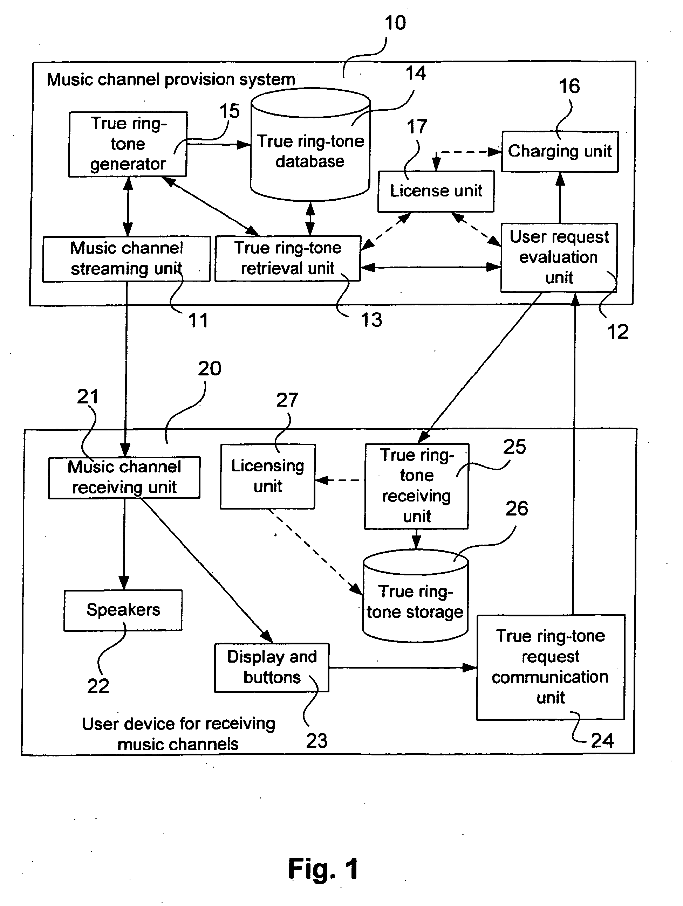

Figure 1 shows a music channel provision system 10 according to a preferred exemplary embodiment of the present invention, e.g. a server of a content service provider, and a user device 20 according to a preferred exemplary embodiment of the present invention, e.g. a specially equipped PDA (personal digital assistant) or a SmartPhone. Besides the shown units necessary for the invention, also other units might be included in the music channel provision system 10 and the user device 20.

The music channel provision system 10 comprises a music channel streaming unit 11, a user request evaluation unit 12, a true ring-tone retrieval unit 13, a true ring-tone database 14, a true ring-tone generator 15, a charging unit 16, and a license unit 17.

The music channel streaming unit 11 outputs an individualized music channel to the user device 20. The music channel comprises a playlist of the individual titles of the music channel. Upon reception of a user request in respect to a true ring-tone, the user request evaluation unit 12 determines for which title and which kind of user device a true ring-tone should be supplied. The user request evaluation unit 12 outputs the result to the true ring-tone retrieval unit 13, which retrieves the corresponding true ring-tone and forwards it to the user request evaluation unit 12. The user request evaluation unit 12 then outputs the true ring-tone to the user device 20 and effects a charging for the transmitted true ring-tone to an account of the user by indicating the output of the true ring-tone to a particular user device to the charging unit 16.

Further, the system 10 might involve the license unit 17 (this option is indicated with dashed arrows) in the forwarding of the retrieved true ring-tone from the true ring-tone retrieval unit 13 to the user request evaluation unit 12 to determine license conditions defining a usage duration of the true ring-tone, within which it is operable on the user device 20. When the license unit 17 is involved no general unlimited access to the transmitted true ring-tone is granted, but the access is determined according to license conditions set for and associated to the true ring-tone. These license conditions, which might be pre-set or individually determined for every requested true ring-tone, might be communicated separately to the true ring-tone or might be embedded therein. Further, the license unit 17 can generate a key on basis of which the user device 20 can modify license conditions associated to and received with a true ring-tone to renew or extend the license. Therewith, in the system according to these preferred embodiments of the present invention that use the license unit 17, the transmitted true ring-tone is licensed (and therewith operable) only for a predetermined usage duration on the user device 20. As indicated above, this means that in these preferred embodiments of the present invention the playback of the transmitted true ring-tone can be limited to a predetermined number of times, number of seconds, or as many replays as desired within a preset period (e.g. one week).
This feature could also include one or more test or preview playbacks which may be without charge. If a user has a playback limited version of a ring-tone, the user can upgrade and obtain an unlimited playback version.

Alternatively to' the separate transmission of the license data, the ring-tone itself may include (embedded in a secure manner) the license data. This may be embedded as a digital watermark. When a user upgrades, the license data may be securely modified to indicate unlimited playback. This obviates the need to resend the entire ring-tone data.
Further, ring-tones for preview by the user may be protected by an audible watermark, which might include an audibly degrading of the ring-tone or an audible indication that this ring-tone is a preview or an advertisement, which may be removed by applying a key received from the system on payment of an upgrade fee. Embedded secure license data may also be used to license the ring-tone to a specific user device or to control whether a ring-tone may be transferred from one user device to another.

A request to upgrade a ring-tone is received by the user request evaluation unit 12, which communicates with the license unit 17 and the charging unit 16. The charging unit 16 also communicates with the license unit 17. Upon receipt of a payment or an indication that a charging is performed from the charging unit 16, the license unit 17 generates the corresponding upgraded license or key and communicates it to the user device 20 via the user request evaluation unit 12.

When the true ring-tone retrieval unit 13 receives a particular music title and a particular type of user device form the user request evaluation unit 12, first a verification is performed whether or not the corresponding true ring-tone is available in the true ring-tone database 14. If this is the case, the corresponding true ring-tone is retrieved and forwarded to the user request evaluation unit 12. If this is not the case, the true ring-tone retrieval unit 13 instructs the true ring-tone generator 15 to generate a corresponding true ring-tone and to output it to the true ring-tone generator 13 or to store it in the true ring-tone database 14. After the true ring-tone generator completed the generation of the corresponding true ring-tone, the true ring-tone retrieval unit 13 (which received the corresponding true ring-tone directly from the true ring-tone generator or via the true ring-tone database 14) forwards the corresponding true ring-tone to the user request retrieval unit 12. As indicated above, this forwarding might involve the license unit 17 so that license conditions might be generated and communicated to the user request generation unit 12 either as a separate file or embedded within the true ring-tone.

When enough system resources are available, the true ring-tone retrieval unit 13 might instruct the true ring-tone generator 15 to generate true ring-tones of the currently streamed music titles and to store these generated true ringtones in the true ring-tone database 14 for later access. In case the user then requests the transmission of a true ring-tone for a currently played music title, it is already available and can be immediately transferred to the user device. In particular, the type of user device used for to stream the music channel to can be determined by the system in advance and only a true ring-tone corresponding to this device type can be stored. The stored true ring-tome might be deleted after the currently played music title is finished (or with a predetermined delay in respect to this point of time), to save resources of the database 14.

The user device 20 for receiving music channels according to the exemplary embodiment shown in figure 1 comprises a music channel receiving unit 21, speakers 22, a display with input buttons 23, a true ring-tone request communication unit 24, a true ring-tone receiving unit 25, a true ring-tone storage 26 and a licensing unit 27.

The music channel receiving unit 21 receives the output of the music channel streaming unit 11 of the music channel provision system 10. The received music stream is output to the speakers 22 and a received playlist is output to the display with input buttons 23. When the user operates one of the buttons to indicate that he wants to receive a true ring-tone of a particular music title, e.g. the currently played one or the previously played one or another one selected from the playlist, this action is forwarded by the true ring-tone request communication unit 24 to the user request evaluation unit 12 of the music channel provision system 10. The resulting true ring-tone transmitted by the user request evaluation unit 12 of the music channel provision system 10 is received by the true ring-tone receiving unit 25, forwarded to the true ring-tone storage 26, stored therein and used by the user device 20 or forwarded to another device of the user, e.g. a mobile phone.

Further, the user device 20 might involve the licensing unit 27 (this option is indicated with dashed arrows) in the forwarding of the retrieved true ring-tone from the true ring-tone receiving unit 25 to the true ring-tone storage 26 to determine license conditions defining a usage duration of the true ring-tone, within which it is operable on the user device 20. When the licensing unit 17 is involved no general unlimited access to the transmitted true ring-tone is granted, but the access is determined according to license conditions set for and associated to the true ring-tone by the license unit 17 of the music channel provision system 10. These license conditions might be received by the licensing unit 27 separately to the true ring-tone or might be received embedded therein. In both cases the license conditions are forwarded from the true ring-tone receiving unit 25 to the licensing unit 27. The licensing unit 27 manages the storing and maintaining of the received true ring-tones within the true ring-tone storage 26 on basis of the received license conditions so that only true ring-tones are stored in the true ring-tone storage that have no expired license.

Further, the licensing unit 27 can receive a key, which is forwarded from the true ring-tone receiving unit 25, on basis of which it can modify previously received license conditions associated to or received embedded within a true ring-tone to renew or extend the license. Such a key can be requested by the user with an operation of the buttons 23, e.g. in response to an indication that the license is about to expire, which action is forwarded by the true ring-tone request communication unit 24 to the user request evaluation unit 12 of the music channel provision system 10.

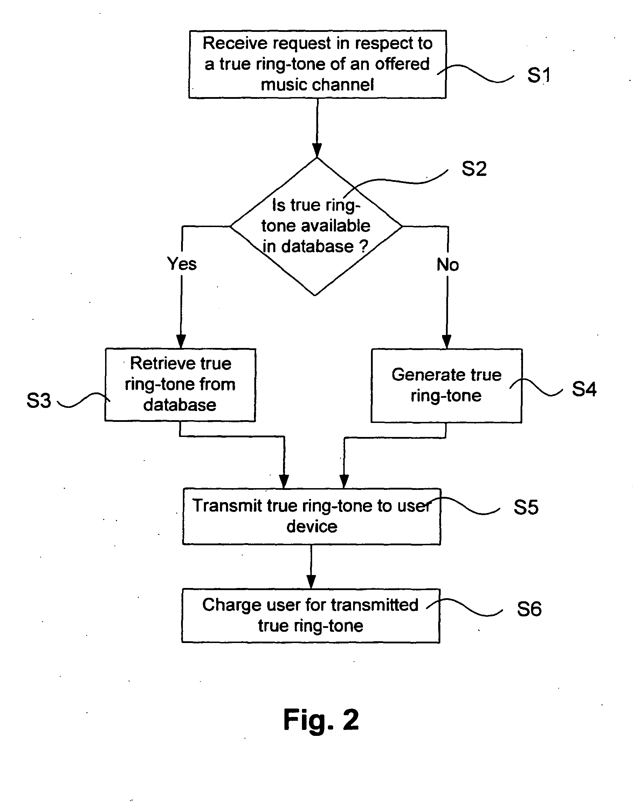

Figure 2 depicts a flowchart of the provision of true ringtones according to a preferred exemplary embodiment of the present invention.

In a first step S1 the music channel provision system 10, in particular the user request evaluation unit 12 of this system, receives a request in respect to a true ring-tone of an offered music channel. Thereafter, in a second step S2, the true ring-tone retrieval unit 13, which received the request from the user request evaluation unit 12, determined whether or not the requested true ring-tone is available in the true ring-tone database 14. If this is the case, the process continues with a third step S3, in which the true ring-tone is retrieved from the true ring-tone database 14; thereafter, a fifth step S5 is performed. If this is not the case, the process continues with a fourth step S4 (after the second step S2), in which a corresponding true ring-tone is generated; thereafter, the fifth step S5 is performed. In the fifth step S5 the retrieved or generated true ring-tone is transmitted to the user device, before in a following sixth step S6 the user gets charged for the transmitted true ring-tone.

## Claims

1. System (10) for providing at least one music channel to a user device (20) for streaming music titles, **characterized by**
- a true ring-tone generator (15) for automatically generating true ring-tones of the currently streamed music titles,
- a true ring-tone database (14) for storing the generated true ring-tones, and
- a user request evaluation unit (12) for receiving an incoming user request in respect to a true ring-tone for a particular individual music title played in said at least one music channel and for a subsequent transmitting of said true ring-tone to the user device (20) .

2. System (10) according to claim 1, **characterized in that** said at least one music channel is personalized to a user of the user device (20).

3. System (10) according to claim 1 or 2, **characterized in that** said particular individual music title is the currently played music title.

4. System (10) according to any one of the claims 1 to 3, **characterized in that** said true ring-tone generator (15) considers the type of user device (20) when generating said true ring-tone.

5. System (10) according to any one of the claims 1 to 4, **characterized in that** said true ring-tone generator uses (15) the first 30 seconds of said particular music title for generating said true ring-tone.

6. System (10) according to any one of the claims 1 to 5, **characterized in that** said true ring-tone generator (15) analyses said particular music title in respect to a characteristic part thereof and uses said characteristic part of said music title for generating said true ring-tone.

7. System (10) according to any one of the preceding
claims, **characterized in that** the database (14) stores true ring-tones of individual music titles in different formats that correspond to different types of user devices (20).

8. System (10) according to any one of the claims 1 to 7, **characterized in that** the true ring-tone database (14) is embodied for storing the generated true ring-tones, wherein the true ring-tones are deleted after the currently played music title is finished or are deleted with a predetermined delay after the currently played music title is finished.

9. System (10) according to any one of the claims 1 to 8, **characterized by** a true ring-tone retrieval unit (13) for determining whether or
not a true ring-tone for a particular individual music title
and a particular type of user device is available in the
database (14), and for retrieving said true ring-tone if it
is available.

10. System (10) according to any one of the preceding claims, **characterized by** a charging unit (16), adding a charge for the transmitted true ring-tone to an account of the user.

11. System (10) according to claim 10, **characterized in that** the charging unit (16) registers a rights charge corresponding to at least a part of the user charge to an account of the rights holder in the music title.

12. System (10) according to any one of the preceding
claims, **characterized by**
a license unit (17) to determine license conditions defining a usage duration of the true ring-tone, within which it is operable on the user device (20), and to associate and send these license conditions with the true ring-tone, and/or to generate a key on basis of which the user device (20) can modify license conditions associated to and received with a true ring-tone.

13. Method for streaming music titles via a channel to a user device, **characterized by** the steps:
- automatically generating true ring-tones of the currently streamed music titles,
- storing the generated true ring-tones in a true ring-tone database (14) for,
- receiving an incoming user request in respect to a true ring-tone for a particular individual music title played in said at least one music channel, and
- subsequently transmitting said true ring-tone to the user device (20).

14. Method according to claim 13, **characterized by** the step of:
personalising said at least one music channel to a user of the user device (20).

15. Method according to claim 13 or 14, **characterized in**
**that** said particular individual music title is the currently
played music title.

16. Method according to claim 15, **characterized by** the step of:
considering the type of user device (20) when generating said true ring-tone.

17. Method according to claim 13 or 14, **characterized by** the step of:
using the first 30 seconds of said particular music title for
generating said true ring-tone.

18. Method according to claim 13 or 14, **characterized by** the steps:
analysing said particular music title in respect to a characteristic part thereof, and
using said characteristic part of said music title for generating said true ring-tone.

19. Method according to any one of the preceding claims 13 to 18, **characterized by** the step of:
storing true ring-tones of individual music titles in different formats that correspond to different types of user devices' in a database (14).

20. Method according to claim 19, **characterized by** the
steps:
determining whether or not a true ring-tone for a particular individual music title and
a particular type of user device is available in the database (14), and retrieving said true ring-tone if it is available.

21. Method according to any one of the preceding claims 13 to 20, **characterized by** the step of:
adding a charge for the transmitted true ring-tone to an account of the user.

22. Method according to claim 21, **characterized by** the step of:
registering a rights charge corresponding to at least a part of the user charge to an account of the rights holder in the music title.

23. Method according to any one of the preceding claims 13 to 22, **characterized by** the step of:
indicating and/or licensing the transmitted true ring-tone to be operable for a predetermined usage duration on the user device.

24. Computer program product, comprising computer program means adapted to perform the method steps as defined in anyone of claims 13 to 23 when being executed on a computer, digital signal processor or the like.

25. Computer readable storage means, storing thereon a computer program product according to claim 24.

## Patentansprüche

1. System (10) zum Bereitstellen zumindest eines Musikkanals für eine Benutzereinrichtung (20) zum Streaming von Musiktiteln, **gekennzeichnet durch**
- einen Echt-Klingelton-Generator (15) zum automatischen Erzeugen von Echt-Klingeltönen des momentan gestreamten Musiktitels,
- eine Echt-Klingelton-Datenbank (14) zum Speichern der erzeugten Echt-Klingeltöne, und
- eine Benutzeranfragenbewertungseinheit (12) zum Empfangen einer eingehenden Benutzeranfrage bezüglich eines Echt-Klingeltons für einen bestimmten individuellen Musiktitel, der auf zumindest einem Musikkanal gespielt wird und zum darauffolgenden Übertragen des Echt-Klingeltons zur Benutzereinrichtung (20).

2. System (10) gemäß Anspruch 1, **dadurch gekennzeichnet,**
**dass** der zumindest eine Musikkanal für einen Benutzer der Benutzereinrichtung (20) personalisiert ist.

3. System (10) gemäß Anspruch 1 oder 2, **dadurch gekennzeichnet,**
**dass** der bestimmte individuelle Musiktitel der momentan gespielte Musiktitel ist.

4. System (10) gemäß einem der Ansprüche 1 bis 2, **dadurch gekennzeichnet,**
**dass** der Echt-Klingeltöne-Generator (15) die Art der Benutzereinrichtung (20) berücksichtigt, wenn er den echten Klingelton erzeugt.

5. System (10) gemäß einem der Ansprüche 1 bis 4, **dadurch gekennzeichnet,**
**dass** der Echt-Klingeltöne-Generator (15) die ersten 30 Sekunden des bestimmten Musiktitels zum Erzeugen des Echt-Klingeltons verwendet.

6. System (10) gemäß einem der Ansprüche 1 bis 15, **dadurch gekennzeichnet,**
**dass** der Echt-Klingeltöne-Generator (15) den bestimmten Musiktitel bezüglich charakteristischer Teile davon analysiert und diese charakteristischen Teile des Musiktitels zum Erzeugen des Echt-Klingeltons verwendet.

7. System (10) gemäß einem der vorstehenden Ansprüche, **dadurch gekennzeichnet,**
**dass** die Datenbank (14) Echt-Klingeltöne von individuellen Musiktiteln in verschiedenen Formaten, die den verschiedenen Arten von Benutzereinrichtungen (20) entsprechen, speichert.

8. System (10) gemäß einem der Ansprüche 1 bis 7, **dadurch gekennzeichnet,**
**dass** die Echt-Klingeltöne-Datenbank (14) zum Speichern der erzeugten echten Klingeltöne ausgebildet ist, wobei die echten Klingeltöne gelöscht werden, nachdem der momentan gespielte Musiktitel beendet ist oder sie werden mit einer vorbestimmten Verzögerung nachdem der momentan gespielte Musiktitel beendet ist, gelöscht.

9. System (10) gemäß einem der Ansprüche 1 bis 8, **gekennzeichnet durch** eine Echt-Klingeltöne-Abfrageeinheit (13) zum Bestimmen, ob oder ob nicht ein Echt-Klingelton für einen bestimmten individuellen Musiktitel und eine bestimmte Art von Benutzereinrichtung in der Datenbank (14) verfügbar ist und zum Abrufen dieses Echt-Klingeltons, wenn er verfügbar ist.

10. System (10) gemäß einem der vorstehenden Ansprüche, **gekennzeichnet durch** eine Abrechnungseinheit (16), die eine Gebühr für den übertragenen Echt-Klingelton einem Benutzerkonto hinzufügt.

11. System (10) gemäß Anspruch 10, **dadurch gekennzeichnet,**
**dass** die Abrechnungseinheit (16) eine Rechte-Gebühr entsprechend zumindest einem Teil der Benutzergebühr zu einem Konto des Rechteinhabers am Musiktitel registriert.

12. System (10) gemäß einem der vorstehenden Ansprüche, **gekennzeichnet durch**
eine Lizenzierungseinheit (17) zum Bestimmen von Lizenzierungsbedingungen, die eine Benutzungsdauer des Echt-Klingeltons definiert, die auf der Benutzereinrichtung (20) betriebsfähig ist, und zum Verbinden und Übertragen dieser Lizenzbedingungen mit dem Echt-Klingelton, und/oder zum Erzeugen eines Schlüssels, auf dessen Basis die Benutzereinrichtung (20) mit einem Echt-Klingelton verbundene und empfangene Lizenzbedingungen modifiziert werden können.

13. Verfahren zum Streaming von Musiktiteln über einem Kanal zu einer Benutzereinrichtung, **gekennzeichnet durch** die Schritte:
- automatisches Erzeugen von Echt-Klingeltönen der momentan gestreamten Musiktitel,
- Speichern des erzeugten Echt-Klingeltons in einer Echt-Klingeltöne-Datenbank (14), zum
- Empfangen einer eingehenden Benutzeranfrage bezüglich eines Echt-Klingeltons für einen bestimmten individuellen Musiktitel, der auf zumindest einem Musikkanal gespielt wird, und
- anschließendes Übertragen des Echt-Klingeltons zur Benutzereinrichtung (20).

14. Verfahren gemäß Anspruch 13, **gekennzeichnet durch** den Schritt des:
Personalisierens des zumindest einen Musikkanals für einen Benutzer der Benutzereinrichtung (20).

15. Verfahren gemäß Anspruch 13 oder 14, **dadurch gekennzeichnet, dass** der bestimmte individuelle Musiktitel der momentan gespielte Musiktitel ist.

16. Verfahren gemäß Anspruch 15, **gekennzeichnet durch** den Schritt des:
Berücksichtigens der Art von Benutzereinrichtung (20) beim Erzeugen des Echt-Klingeltons.

17. Verfahren gemäß Anspruch 13 oder 14, **gekennzeichnet durch** den Schritt des:
Benutzens der ersten 30 Sekunden des bestimmten Musiktitels zum Erzeugen des Echt-Klingeltons.

18. Verfahren gemäß Anspruch 13 oder 14, **gekennzeichnet durch** die Schritte:
Analysieren des bestimmten Musiktitels bezüglich eines charakteristischen Teils davon, und
Benutzen des charakteristischen Teils des Musiktitels zum Erzeugen des Echt-Klingeltons.

19. Verfahren gemäß einem der vorstehenden Ansprüche 13 bis 18, **gekennzeichnet durch** die Schritte des:
Speicherns von Echt-Klingeltönen von individuellen Musiktiteln in verschiedenen Formaten, die verschiedenen Arten von Benutzereinrichtungen in einer Datenbank (14) entsprechen.

20. Verfahren gemäß Anspruch 19, **gekennzeichnet durch** die Schritte:
Bestimmen, ob ein Echt-Klingelton für einen bestimmten individuellen Musiktitel und eine bestimmte Art von Benutzereinrichtung in der Datenbank (14) verfügbar ist oder nicht und Abrufen des Echt-Klingeltons, wenn er verfügbar ist.

21. Verfahren gemäß einem der vorstehenden Ansprüche 13-20, **gekennzeichnet durch** den Schritt des:
Hinzufügens einer Gebühr für den übertragenen Echt-Klingelton zu einem Benutzerkonto.

22. Verfahren gemäß Anspruch 21, **gekennzeichnet durch** den Schritt des:
Registrierens einer Rechte-Gebühr entsprechend zumindest eines Teils der Benutzergebühr für ein Konto des Rechteinhabers des Musiktitels.

23. Verfahren gemäß einem der vorstehenden Ansprüche 13 bis 22, **gekennzeichnet durch** den Schritt des:
Anzeigens und/oder Lizenzierens des übertragenen Echt-Klingeltons, sodass dieser für eine vorbestimmte Benutzungsdauer auf der Benutzereinrichtung betreibbar ist.

24. Computerprogrammprodukt, umfassend Computerprogrammmittel, die zum Ausführen der Verfahrensschritte, wie sie in einem der Ansprüche 13 bis 23 definiert sind, ausgebildet sind, wenn diese auf einem Computer, einem digitalen Signalprozessor oder dergleichen ausgeführt werden.

25. Computerlesbares Speichermedium zum Speichern eines Computerprogrammprodukts darauf gemäß Anspruch 24.

## Revendications

1. Système (10) pour présenter au moins un canal de musique à un dispositif utilisateur (20) pour diffuser en flux ("streaming") des titres de musique, **caractérisé par**
- un générateur de sonnerie vraie (15) pour générer automatiquement des sonneries vraies des titres de musique actuellement diffusés en flux,
- une base de données de sonneries vraies (14) pour stocker les sonneries vraies générées, et
- une unité d'évaluation de requête utilisateur (12) pour recevoir une requête utilisateur arrivant à l'égard d'une sonnerie vraie pour un titre de musique individuel particulier en lecture dans ledit au moins un canal de musique et pour une transmission ultérieure de ladite sonnerie vraie au dispositif utilisateur (20).

2. Système (10) selon la revendication 1, **caractérisé en ce que** ledit au moins un canal de musique est personnalisé pour un utilisateur du dispositif utilisateur (20).

3. Système (10) selon la revendication 1 2, **caractérisé en ce que** le titre de musique individuel particulier est le titre de musique actuellement en lecture.

4. Système (10) selon l'une quelconque des revendications 1 à 3, **caractérisé en ce que** ledit générateur de sonnerie vraie (15) prend en considération le type de dispositif utilisateur (20) lorsqu'il génère ladite sonnerie vraie.

5. Système (10) selon l'une quelconque des revendications 1 à 4, **caractérisé en ce que** ledit générateur de sonnerie vraie (15) utilise les 30 premières secondes dudit titre de musique particulier pour générer ladite sonnerie vraie.

6. Système (10) selon l'une quelconque des revendications 1 à 5, **caractérisé en ce que** ledit générateur de sonnerie vraie (15) analyse ledit titre de musique particulier à l'égard d'une partie caractéristique de celui-ci et utilise ladite partie caractéristique dudit titre de musique pour générer ladite sonnerie vraie.

7. Système (10) selon l'une quelconque des revendications précédentes, **caractérisé en ce que** la base de données (14) stocke des sonneries vraies de titres de musique individuels dans différents formats qui correspondent à différents types de dispositifs utilisateurs (20).

8. Système (10) selon l'une quelconque des revendications 1 à 7, **caractérisé en ce que** la base de données de sonneries vraies (14) est réalisée pour stocker les sonneries vraies générées, de sorte que les sonneries vraies sont effacées après la fin du titre de musique actuellement en lecture, ou sont effacées avec un retard prédéterminé après la fin du titre de musique actuellement en lecture.

9. Système (10) selon l'une quelconque des revendications 1 à 8, **caractérisé par** une unité de récupération de sonnerie vraie (13) pour déterminer si une sonnerie vraie pour un titre de musique individuel particulier et pour un type particulier de dispositif utilisateur est disponible ou non dans la base de données (14), et pour récupérer ladite sonnerie vraie si elle est disponible.

10. Système (10) selon l'une quelconque des revendications précédentes, **caractérisé par** une unité de facturation (16), ajoutant une facture pour la sonnerie vraie transmise à un compte de l'utilisateur.

11. Système (10) selon la revendication 10, **caractérisé en ce que** l'unité de facturation (16) enregistre une facturation de droits correspondant à au moins une partie de la facture utilisateur dans un compte du détenteur des droits du titre de musique.

12. Système (10) selon l'une quelconque des revendications précédentes, **caractérisé par** une unité d'attribution de licence (17) pour déterminer des conditions de licence définissant une durée d'utilisation de la sonnerie vraie, pendant laquelle elle est utilisable sur le dispositif utilisateur (20), et pour associer et envoyer ces conditions de licence avec la sonnerie vraie, et/ou pour générer une clé sur la base de laquelle le dispositif utilisateur (20) peut modifier les conditions de licence associées à et reçues avec une sonnerie vraie.

13. Procédé pour diffuser en flux des titres de musique via un canal à un dispositif utilisateur, **caractérisé par** les étapes consistant à :
- générer automatiquement des sonneries vraies des titres de musique actuellement diffusés en flux,
- stocker les sonneries vraies générées dans une base de données de sonneries vraies (14) pour
- recevoir une requête utilisateur arrivant à l'égard d'une sonnerie vraie pour un titre de musique individuel particulier en lecture dans ledit au moins un canal de musique, et
- transmettre ultérieurement ladite sonnerie vraie au dispositif utilisateur (20)

14. Procédé selon la revendication 13, **caractérisé par** l'étape consistant à personnaliser ledit au moins un canal de musique pour un utilisateur du dispositif utilisateur (20).

15. Procédé selon la revendication 13 ou 14, **caractérisé en ce que** ledit titre de musique individuel particulier est le titre de musique actuellement en lecture.

16. Procédé selon la revendication 15, **caractérisé par** l'étape consistant à prendre en considération le type de dispositif utilisateur (20) lorsqu'on génère ladite sonnerie vraie.

17. Procédé selon la revendication 13 ou 14, **caractérisé par** l'étape consistant à utiliser les 30 premières secondes dudit titre de musique particulier pour générer ladite sonnerie vraie.

18. Procédé selon la revendication 13 ou 14, **caractérisé par** les étapes consistant à :
analyser ledit titre de musique particulière à l'égard d'une partie caractéristique de celui-ci, et
utiliser ladite partie caractéristique dudit titre de musique pour générer ladite sonnerie vraie.

19. Procédé selon l'une quelconque des revendications précédentes 13 à 18, **caractérisé par** l'étape consistant à stocker des sonneries vraies de titres de musique individuels dans différents formats qui correspondent à différents types de dispositifs utilisateurs dans une base de données (14).

20. Procédé selon la revendication 19, **caractérisé par** les étapes consistant à :
déterminer si une sonnerie vraie pour un titre de musique individuel particulier et un type particulier de dispositif utilisateur est disponible ou non dans la base de données (14), et
récupérer ladite sonnerie vraie si elle est disponible.

21. Procédé selon l'une quelconque des revendications précédentes 13 à 20,
**caractérisé par** l'étape consistant à ajouter une facture pour la sonnerie vraie transmise à un compte de l'utilisateur.

22. Procédé selon la revendication 21, **caractérisé par** l'étape consistant à enregistrer une facture de droits correspondant à au moins une partie de la facture utilisateur dans un compte du détenteur des droits du titre de musique.

23. Procédé selon l'une quelconque des revendications précédentes 13 à 22, **caractérisé par** l'étape consistant à indiquer et/ou accorder une licence de la sonnerie vraie transmise pour être utilisable pour une durée d'usage prédéterminée sur le dispositif utilisateur.

24. Produit de programme d'ordinateur, comprenant des moyens formant programme d'ordinateur adaptés à exécuter les étapes du procédé tel que défini dans l'une quelconque des revendications 13 à 23 lorsqu'il est exécuté sur un ordinateur, un processeur de signaux numériques, ou similaire.

25. Moyens de stockage lisibles à l'ordinateur, sur lesquels est stocké un produit de programme d'ordinateur selon la revendication 24.
